(19) Europäisches Patentamt / European Patent Office / Office européen des brevets

(11) **EP 2 810 203 B1**

(12) **FASCICULE DE BREVET EUROPEEN**

(45) Date de publication et mention de la délivrance du brevet:
**08.04.2020 Bulletin 2020/15**

(21) Numéro de dépôt: **13704214.9**

(22) Date de dépôt: **28.01.2013**

(51) Int Cl.:
**G06F 21/00** *(2013.01)*     **G06F 21/10** *(2013.01)*

(86) Numéro de dépôt international:
**PCT/FR2013/050171**

(87) Numéro de publication internationale:
**WO 2013/114031 (08.08.2013 Gazette 2013/32)**

(54) **PROCÉDÉ ET SYSTÈME DE MISE A DISPOSITION D'AU MOINS UN OBJET NUMÉRIQUE SUR UN GESTIONNAIRE DE BIBLIOTHEQUE NUMÉRIQUE**

VERFAHREN UND SYSTEM ZUR BEREITSTELLUNG VON MINDESTENS EINEM DIGITALEN OBJEKT ÜBER EINEN DIGITALEN BIBLIOTHEKENMANAGER

METHOD AND SYSTEM FOR PROVIDING AT LEAST ONE DIGITAL OBJECT ON A DIGITAL LIBRARY MANAGER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.02.2012 FR 1250958**

(43) Date de publication de la demande:
**10.12.2014 Bulletin 2014/50**

(73) Titulaire: **Orange**
**75015 Paris (FR)**

(72) Inventeurs:
• **AUVRAY, Vincent**
**F-50460 Tonneville (FR)**
• **LECLERCQ, Thierry**
**F-75013 Paris (FR)**

(74) Mandataire: **Plasseraud IP**
**66, rue de la Chaussée d'Antin**
**75440 Paris Cedex 09 (FR)**

(56) Documents cités:
**US-A1- 2005 240 588**

• **HEEYOUL KIM ET AL: "Digital Rights Management with Right Delegation for Home Networks", 1 January 2006 (2006-01-01), INFORMATION SECURITY AND CRYPTOLOGY 4296/2006; ICISC 2006 LECTURE NOTES IN COMPUTER SCIENCE;;LNCS, SPRINGER, BERLIN, DE, PAGE(S) 233 - 245, XP019051328, ISBN: 978-3-540-49112-5**
• **NEUMAN B C ED - INSTITUTE OF ELECTRICAL AND ELECTRONICS ENGINEERS: "Proxy-based authorization and accounting for distributed systems", PROCEEDINGS OF THE INTERNATIONAL CONFERENCE ON DISTRIBUTED COMPUTING SYSTEMS. PITTSBURGH, MAY 25 - 28, 1; [PROCEEDINGS OF THE INTERNATIONAL CONFERENCE ON DISTRIBUTED COMPUTING SYSTEMS], LOS ALAMITOS, IEEE COMP. SOC. PRESS, US, vol. CONF. 13, 25 May 1993 (1993-05-25), pages 283-291, XP010095707, DOI: 10.1109/ICDCS.1993.287698 ISBN: 978-0-8186-3770-4**

## Description

L'objet de la présente invention a trait au domaine de la distribution d'objets numériques, et plus précisément au domaine de la mise à disposition d'au moins un objet numérique à destination d'un utilisateur muni d'un équipement de lecture numérique tel que par exemple un téléphone mobile du type « Smartphone », un ordinateur, une liseuse numérique, une tablette numérique, ou tous autres types de support multimédia apte à consulter le contenu d'un objet numérique.

L'objet de la présente invention permet avantageusement le développement de nouveaux services de mise à disposition d'objets numériques ; de façon plus générale, l'objet de la présente invention propose une nouvelle approche de la chaîne de distribution des contenus numériques, ceci notamment en élargissant et enrichissant l'offre proposée tout en maintenant la sécurisation de ces contenus.

Par objet numérique au sens de la présente invention, on entend dans toute la description qui suit tout objet numérique contenant des informations numériques telles que par exemple des informations numériques multimédia. A titre d'exemples non limitatifs, les objets numériques au sens de la présente invention peuvent être des contenus numériques comme de la musique, de la vidéo, un livre numérique, un logiciel, une application, etc.

Actuellement, une grande majorité des systèmes de distribution d'objets numériques consiste en des systèmes intégrés et verticaux : dans ce genre de système, la chaîne de distribution des objets numériques est maîtrisée par un seul et même acteur qui gère le contenu numérique de son édition jusqu'à sa distribution.

Bien souvent, les acteurs de ce marché en pleine expansion offrent des systèmes de distribution, dits propriétaires, dans lesquels les objets numériques proposés présentent un format de fichier propre qui ne peuvent être lus que par un équipement fourni lui aussi par le distributeur, ce qui empêche le client notamment de consulter l'objet sur un autre équipement que celui prévu initialement à cet effet.

Ce genre de systèmes pose également le problème de l'ouverture de l'accès de l'objet numérique à des tiers.

A titre d'exemple, dans le domaine de la distribution de livres numériques, lorsqu'une personne a choisi une liseuse numérique, l'appareil permettant de lire les livres numériques, et que cette personne a acheté un ou plusieurs livres numériques, celle-ci est liée à ces livres pour toute la durée de vie de ces livres. Si la personne souhaite changer de liseuse, elle risque de perdre l'ensemble des livres qu'elle a acquis ; alternativement, si elle veut accéder au contenu d'un de ses livres sur une autre liseuse, elle ne peut pas forcément le faire notamment pour des raisons de format de fichier ou de contrôle d'accès.

De la même façon, si une personne achète deux livres numériques chez deux fournisseurs indépendants, elle ne peut pas forcément ranger ses livres numériques dans une même bibliothèque numérique.

D'autres systèmes de distribution d'objets numériques plus ouverts existent. Dans ces systèmes, est dissocié le métier de distributeur d'objets numériques du métier de vendeur d'objets numériques. Dans de tels systèmes, ce sont les objets numériques qui sont échangés entre les distributeurs et les vendeurs. De tels systèmes imposent donc une grande interopérabilité entre les différents acteurs du marché, ceci notamment tant au niveau des fabricants d'équipements de lecture numériques qu'au niveau de l'infrastructure du système de distribution ou du format des fichiers distribués.

De plus, avec de tels systèmes, se pose le problème de la sécurité des objets numériques qui sont échangés et distribués. En effet, les objets numériques ont une valeur marchande qui suscite généralement l'intérêt des activités de type piratage.

Bien souvent, pour éviter ou tout au moins limiter ce genre d'activités frauduleuses, les systèmes de distribution exploitent des fichiers de gestion des droits numériques, également connus sous l'appellation « DRM » pour « Digital Rights Management ».

Le principe d'une telle gestion des droits repose sur l'exploitation d'un chiffrement de l'œuvre combiné à un accès conditionnel. Ainsi, le distributeur qui exploite ce contrôle d'accès ne confie la clé de contrôle pour l'accès à l'objet numérique qu'en échange d'une preuve d'achat ou de souscription pour y accéder.

L'accès à la lecture de l'objet numérique n'est alors autorisé que pour l'équipement ou l'identification logicielle certifiée par le fournisseur. Un tel accès est donc lourd à gérer, ceci aussi bien pour le distributeur que pour l'utilisateur final.

En effet, l'intégration d'une telle sécurité exclusivement dans les fichiers DRM crée des problèmes de manipulation chez l'utilisateur quand il change d'équipement de lecture ; on constate notamment que de telles contraintes freinent considérablement certains gestes du consommateur, comme par exemple le cadeau ou le prêt.

De plus, dans les systèmes à deux acteurs comme décrits ci-dessus, la sécurité reposant sur la DRM est associée à un terminal de manipulation spécifique et unique, ce qui complique la vie du consommateur qui doit redemander un nouvel envoi de fichier dès qu'il veut changer de terminal.

Le document US 2005/240588 divulgue un procédé de mise à disposition d'un objet numérique à destination d'un utilisateur muni d'un équipement de lecture numérique. Le document XP019051328, intitulé "Digital Rights Management with Right Delegation for Home Networks" par Heeyoul Kim et al. divulgue un procédé et système permettant à un utilisateur d'accéder à un contenu sélectionné sur une pluralité d'équipements. Une donnée de droit de lecture est fournie à un gestionnaire de domaine local. Une fois que le gestionnaire de domaine local a authentifié l'équipement de l'utilisateur, le gestionnaire de domaine local génère une donnée de droit de lecture pour l'équipement.

En tout état de cause, l'ensemble des systèmes de distribution de l'état de la technique présentent de nombreux inconvénients, tant pour les distributeurs eux-mêmes que pour le consommateur qui le plus souvent est nomade et est amené à changer d'équipements relativement régulièrement.

L'objet de la présente invention vise à améliorer la situation actuelle décrite ci-dessus.

Permettre l'accès pour le consommateur à un grand nombre d'objets numériques tout en lui assurant une grande souplesse dans l'accès au contenu des objets numériques et une bonne sécurité est un des objectifs de la présente invention.

Proposer un nouveau modèle dans la chaîne de distribution des objets numériques est également un des autres objectifs de la présente invention.

L'objet de la présente invention est de proposer un procédé et un système de mise à disposition d'au moins un objet numérique dans lequel les trois corps de métier : vendeur (libraire numérique), distributeur d'objets numériques et éditeur d'objets numériques sont clairement distincts, et échangent entre eux pour mettre à disposition des objets numériques sans manipuler lesdits objets numériques en tant que tels.

A cet effet, l'objet de la présente invention porte sur un procédé de mise à disposition d'au moins un objet numérique à destination d'un utilisateur muni d'un premier équipement de lecture numérique.

Bien évidemment, on comprend ici que le premier équipement de lecture numérique est un équipement multimédia tel que décrit précédemment qui est apte à lire le contenu d'un objet numérique.

Selon la présente invention, une donnée d'identification contenant au moins une information d'identification relative à l'utilisateur du premier équipement de lecture numérique est stockée localement dans le premier équipement de lecture numérique.

Dans une variante de réalisation de la présente invention, cette donnée d'identification est obtenue lors d'une étape de création de compte. Plus précisément, cette étape est une étape de création de compte auprès d'un gestionnaire de bibliothèque numérique personnelle au cours de laquelle la donnée d'identification est générée et est transmise au premier équipement de lecture numérique.

Selon la présente invention, l'utilisateur sélectionne par l'intermédiaire du premier équipement de lecture numérique au moins un objet numérique. Cette sélection se fait avantageusement grâce à Internet via une interface Web.

Selon la présente invention, cette sélection est réalisée directement via une librairie numérique par l'utilisateur par l'intermédiaire de son premier équipement de lecture numérique.

Avantageusement, cette librairie numérique comportant une première base de données stockant au moins une donnée de droit de lecture contenant une information relative aux droits de lecture pour le ou les objets numériques. Ainsi, le ou les objets numériques ne sont pas stockés directement sur la librairie numérique, mais sont stockées sur une troisième base de données comprise sur un serveur de stockage. Ce serveur de stockage est géré par un distributeur d'objets numériques, dit e-distributeur.

Le procédé de mise à disposition selon la présente invention comporte, suite à cette sélection, une étape de génération par un serveur de gestion des droits de lecture d'une donnée de droit de lecture personnel. Cette donnée de droit de lecture personnelle contient au moins une information relative aux droits de lecture de l'objet numérique sélectionné et ladite au moins une information d'identification relative à l'utilisateur.

Suite à cette étape de génération, le procédé de mise à disposition selon la présente invention comporte une étape de transmission de la donnée de droit de lecture personnel vers le gestionnaire de bibliothèque numérique personnelle. Cette étape de transmission est réalisée par le serveur de gestion des droits de lecture.

De préférence, le gestionnaire de bibliothèque numérique personnelle est un serveur de stockage numérique distant utilisant la technologie dite de « computing cloud ». Avantageusement, ce gestionnaire de bibliothèque numérique personnelle consiste donc en une « cloudothèque ».

Pour accéder à l'objet numérique sélectionné, selon la présente invention, l'utilisateur se connecte via le premier équipement de lecture numérique au gestionnaire de bibliothèque numérique personnelle. Cette connexion se fait avantageusement sur Internet via une interface Web.

Le procédé de mise à disposition selon la présente invention comporte, suite à cette connexion, une étape d'authentification de l'utilisateur par l'intermédiaire de la donnée d'identification. Cette étape d'authentification est gérée par le gestionnaire de bibliothèque numérique personnelle qui interroge le serveur de gestion des droits de lecture.

Grâce à cette succession d'étapes techniques, caractéristique de la présente invention, l'invention permet, en fonction de la donnée de droit de lecture personnel, la mise à disposition d'au moins un objet numérique sélectionné sur le premier équipement de lecture numérique.

Ainsi, le principe sur lequel repose la présente invention consiste à utiliser exclusivement les données relatives aux droits de lectures comme moyen d'échange entre ces trois types d'acteurs mentionnés ci-dessus ; selon la présente invention, ces données sont désormais à la base de la gestion, de la distribution, de la sécurité, et de la facturation entre les acteurs de la chaine de distribution des objets numériques.

Après s'être authentifié avec la donnée d'identification, l'utilisateur peut accéder aux contenus numériques qu'il a sélectionnés, cette authentification permettant notamment d'établir une comparaison entre la donnée d'identification et l'information d'identification relative à l'utilisateur qui est contenue dans la donnée de droit de lecture personnel.

Avantageusement, on distingue au moins deux types d'échanges de données de droit de lecture personnel : l'un pour la gestion de l'accès et la sécurité des droits de lecture numériques, ces échanges étant effectués entre le gestionnaire de bibliothèque numérique personnelle et le serveur de gestion des droits de lecture, et l'autre pour les objets numériques en tant que tels, ces échanges étant effectués entre le gestionnaire de bibliothèque numérique personnelle, la librairie numérique et le distributeur d'objets numériques.

Selon une variante de réalisation avantageuse de la présente invention, l'étape de génération consiste notamment à concaténer une donnée de droit de lecture contenant notamment une information relative aux droits de lecture de l'objet numérique sélectionné avec la donnée d'identification. On comprend ici que cette étape de génération peut avantageusement prendre d'autres formes telles que par exemple une agrégation de données.

Avantageusement, la donnée de droit de lecture contient également au moins une information relative aux droits d'utilisation de l'objet numérique sélectionné.

Avantageusement, avant que l'objet numérique soit consulté ou téléchargé pour une lecture, l'information relative aux droits d'utilisation est activée, ceci constitue une étape d'activation qui par exemple peut conditionner dans le temps l'accès à l'objet numérique en fonction de cette information. Cette étape d'activation peut également consister à activer le format de fichier adapté à l'équipement de lecture numérique de l'utilisateur.

Pour permettre la consultation de l'objet numérique par un autre équipement de lecture, le procédé de mise à disposition selon la présente invention comporte en outre une étape d'enregistrement. Cette étape d'enregistrement qui est exécutée par le gestionnaire de bibliothèque numérique personnelle consiste notamment à enregistrer à l'aide de la donnée d'identification un deuxième équipement de lecture numérique pour permettre la mise à disposition de l'objet numérique sélectionné sur le deuxième équipement de lecture numérique.

Dans une variante de réalisation préférée, l'étape d'enregistrement consiste à générer puis transmettre un certificat numérique secret au deuxième équipement de lecture numérique suite à une connexion du deuxième équipement au gestionnaire de bibliothèque numérique personnelle à l'aide de la donnée d'identification.

Selon la présente invention, le deuxième équipement stocke ce certificat numérique secret pour, suite à une prochaine connexion, être autorisé à accéder à l'objet numérique lors d'une authentification de ce certificat par le gestionnaire de bibliothèque numérique personnelle. Une étape sensiblement identique peut également être prévue pour le premier équipement de lecture lors de l'étape de création de compte par exemple.

Corrélativement, l'objet de la présente invention porte sur un programme d'ordinateur qui comporte des instructions adaptées pour l'exécution des étapes du procédé de mise à disposition tel que décrit ci-dessus, ceci notamment lorsque ledit programme d'ordinateur est exécuté par un ordinateur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

De même, l'objet de la présente invention porte sur un support d'enregistrement lisible par un ordinateur sur lequel est enregistré un programme d'ordinateur comprenant des instructions pour l'exécution des étapes du procédé de mise à disposition tel que décrit ci-dessus.

D'une part, le support d'enregistrement peut être n'importe quel entité ou dispositif capable de stocker le programme. Par exemple, le support peut comporter un moyen de stockage, tel qu'une mémoire ROM, par exemple un CD-ROM ou une mémoire ROM de type circuit microélectronique, ou encore un moyen d'enregistrement magnétique, par exemple une disquette de type « floppy disc » ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

L'objet de la présente porte également sur le système de mise à disposition pour la mise en œuvre du procédé décrit ci-dessus. Plus précisément, l'objet de la présente invention porte sur un système de mise à disposition d'au moins un objet numérique à destination d'un utilisateur muni d'un premier équipement de lecture numérique sur lequel est stockée localement une donnée d'identification, cette donnée d'identification contenant au moins une information d'identification relative à l'utilisateur.

Le système de mise à disposition selon la présente invention comprend au moins une librairie numérique, un serveur de gestion des droits de lecture, et un gestionnaire de bibliothèque numérique personnelle.

La librairie numérique comporte un moyen de sélection configuré pour permettre la sélection par l'intermédiaire du premier équipement de lecture numérique d'un objet numérique.

Avantageusement, la librairie numérique comporte une première base de données stockant au moins une donnée de droit de lecture contenant une information relative aux droits de lecture dudit au moins un objet numérique.

Le serveur de gestion des droits de lecture comporte une deuxième base de données stockant également au moins une donnée de droit de lecture, cette donnée de droit de lecture contenant une information relative aux droits de lecture pour ledit au moins un objet numérique.

Avantageusement, les données de droits de lecture sont générées puis transmises par le distributeur d'objets numériques, qui lui-même est en relation avec les éditeurs directement.

Le serveur de gestion des droits de lecture comporte en outre un moyen de génération configuré pour permettre, en fonction de la donnée de droits de lecture de la ou des objets numériques sélectionnés, la génération d'une donnée de droit de lecture personnel. Cette donnée de droit de lecture personnel contient au moins une information relative aux droits de lecture de l'objet numérique sélectionné et ladite au moins une information d'identification relative à l'utilisateur.

Dans une variante de réalisation avantageuse, le moyen de génération est configuré pour concaténer la donnée de droit de lecture contenant une information relative aux droits de lecture de l'objet numérique sélectionné avec la donnée d'identification.

Avantageusement, le moyen de génération est configuré de telle manière que la donnée de droit de lecture contient également au moins une information relative aux droits d'utilisation de l'objet numérique sélectionné.

Le serveur de gestion des droits de lecture comporte également un moyen de transmission configuré pour permettre la transmission de la donnée de droit de lecture personnel vers un gestionnaire de bibliothèque numérique personnelle.

Avantageusement, le gestionnaire de bibliothèque numérique personnelle comporte un moyen de stockage numérique configuré pour recevoir et mémoriser la donnée de droit de lecture personnel transmise par le serveur de gestion des droits de lecture.

Le gestionnaire de bibliothèque numérique personnelle comporte en outre un moyen d'authentification qui est configuré pour permettre, suite à une connexion du premier équipement de lecture numérique au gestionnaire de bibliothèque numérique personnelle, l'authentification de l'utilisateur par l'intermédiaire de la donnée d'identification.

Avantageusement, le gestionnaire de bibliothèque numérique personnelle comporte également un moyen d'activation configuré pour activer les droits d'utilisation de l'objet numérique après l'authentification de l'utilisateur.

Dans une variante de réalisation de la présente invention, le gestionnaire de bibliothèque numérique personnelle comporte également un moyen de création de compte qui est configuré pour générer et transmettre la donnée d'identification au premier équipement de lecture numérique.

Avantageusement, le gestionnaire de bibliothèque numérique personnelle comporte un moyen d'enregistrement qui est configuré pour enregistrer à l'aide de la donnée d'identification un deuxième équipement de lecture numérique pour permettre la mise à disposition de l'objet numérique sélectionné sur ce deuxième équipement.

Dans une variante de réalisation de la présente invention, le moyen d'enregistrement est configuré pour générer puis transmettre un certificat numérique secret au deuxième équipement de lecture numérique suite à une connexion du deuxième équipement au gestionnaire de bibliothèque numérique à l'aide de la donnée d'identification.

Ainsi, l'objet de la présente invention, par ses différents aspects fonctionnels et structurels, permet de mettre à disposition des objets numériques en simplifiant les échanges entre les différents acteurs de la chaîne de distribution des objets numériques, le principe de cette mise à disposition reposant sur les échanges d'au moins une donnée de droit de lecture personnel sur les objets numériques sélectionnés par l'utilisateur. Un tel échange de données permet notamment aux consommateurs d'accéder aux objets numériques sans subir les différentes contraintes rencontrées jusqu'à présent dans l'état de la technique décrit précédemment.

Par ailleurs, on comprend ici que le modèle de mise à disposition d'objets numériques proposé ici dans le cadre de la présente invention permet avantageusement le développement des différents corps de métiers de la chaîne de production des objets numériques en permettant au consommateur final l'accès à plusieurs librairies numériques (dites e-librairies) avec une grande liberté.

D'autres caractéristiques et avantages de la présente invention ressortiront de la description ci-dessous, en référence aux figures 1 à 2 annexées qui en illustrent un exemple de réalisation dépourvu de tout caractère limitatif et sur lesquelles :

- la figure 1 représente de façon schématique un système de mise à disposition d'au moins un objet numérique selon un exemple de réalisation avantageux de la présente invention ; et
- la figure 2 représente de façon schématique un organigramme illustrant le procédé mise à disposition d'au moins un objet numérique selon un exemple de réalisation avantageux de la présente invention.

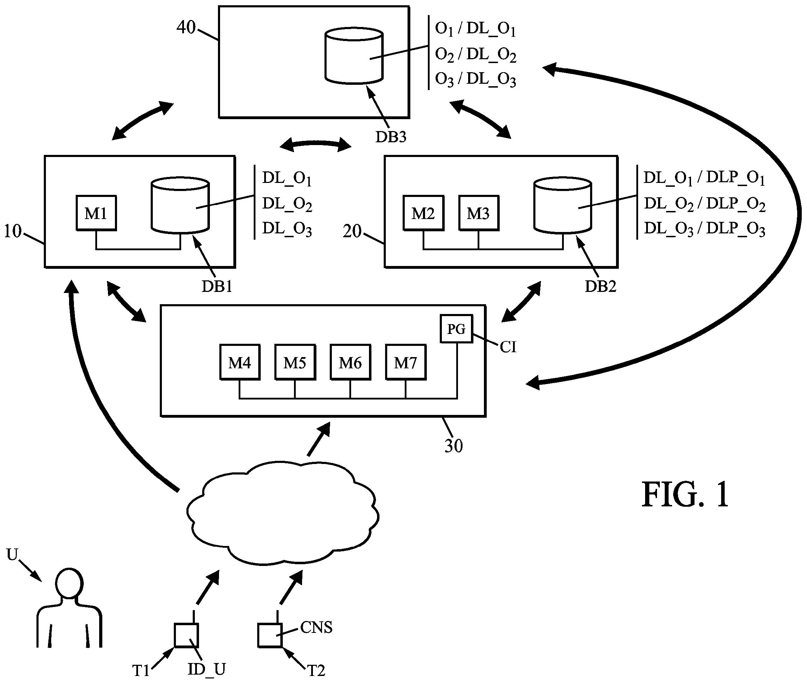

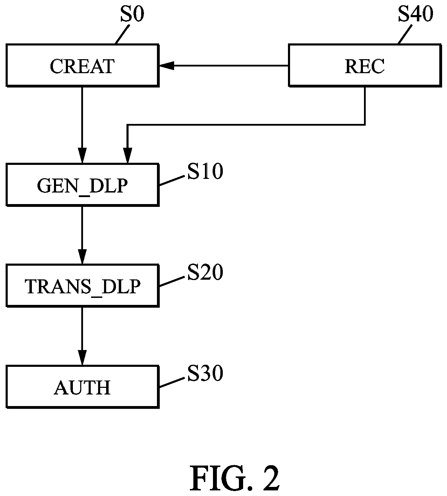

Un système et un procédé de mise à disposition d'au moins un objet numérique, conformes à un exemple de réalisation avantageux de la présente invention, vont maintenant être décrits dans ce qui suit en faisant référence conjointement aux figures 1 à 2.

Pour rappel, permettre la mise à disposition d'au moins un objet numérique pour un utilisateur final en évitant les différents inconvénients identifiés précédemment est un des objectifs de la présente invention.

De la même façon, développer et enrichir l'offre des objets numériques proposée dans la chaîne de distribution des objets numériques tout en maintenant la sécurisation de ces objets est également un des autres objectifs de la présente invention.

A cet effet, dans l'exemple décrit ici, et comme illustré notamment en figure 1, l'objet de la présente invention porte sur un système de mise à disposition 100 permettant la mise à disposition d'au moins un objet numérique O1, O2, O3 à destination d'un utilisateur U muni d'un premier équipement T1 de lecture numérique.

Dans l'exemple décrit ici, le système de mise à disposition 100 comprend au moins une librairie numérique 10 (dite e-librairie), un serveur de gestion 20 des droits de lecture, et un gestionnaire de bibliothèque numérique personnelle 30.

Dans l'exemple décrit ici, le système de mise à disposition 100 comprend également au moins un distributeur 40 d'objets numériques (dit e-distributeur).

Dans l'exemple décrit ici, l'utilisateur U est muni d'un premier équipement T1 de lecture numérique tel que par exemple un « Smartphone » ou un ordinateur portable. Bien évidemment, tous autres équipements de lecture numérique peuvent être envisagés dans le cadre de la présente invention.

Dans l'exemple décrit ici, lors d'une étape de création de compte S0, l'utilisateur U se connecte via une interface Web au gestionnaire de bibliothèque numérique personnelle 30 pour créer un compte, ceci par l'intermédiaire d'un moyen de création de compte M5 qui génère et transmet au premier équipement T1 de lecture numérique une donnée d'identification ID_U, cette donnée d'identification ID_U contenant au moins une information d'identification relative à l'utilisateur U : il s'agit par exemple d'un numéro de client.

Cette étape de création de compte S0 peut prendre la forme d'une souscription à un abonnement. Il est bien évident ici que le premier équipement T1 doit être configuré pour pouvoir d'une part se connecter au gestionnaire de librairie numérique personnelle 30 et d'autre part recevoir et enregistrer la donnée d'identification ID_U.

Une fois l'utilisateur U inscrit, ce dernier peut sélectionner un ou plusieurs objets numériques O1, O2, O3, ces objets numériques étant par exemple une vidéo, de la musique, un livre numérique ou encore une application.

Cette sélection est caractéristique de la présente invention.

En effet, contrairement aux autres systèmes proposés dans l'état de la technique, cette sélection consiste à sélectionner directement à partir de la librairie numérique 10 au moins un objet numérique O1, O2, O3, ceci par l'intermédiaire d'un moyen de sélection M1. De façon caractéristique, cette sélection ne consiste pas à sélectionner l'objet numérique O1, O2, O3 en tant que tel, mais consiste à ne sélectionner qu'une donnée contenant une information relative à cet objet O1, O2, O3. A titre d'exemple non limitatif, une telle donnée peut contenir une information telle que par exemple une information relative au titre, et/ou à l'auteur, et/ou à la date d'édition, et/ou relative à une image ou tout autre donnée de type métadonnée.

Plus précisément, dans l'exemple de réalisation décrit ici, la librairie numérique 10 contient une première base de données DB1 stockant des données qui contiennent chacune une information relative respectivement aux objets numériques O1, O2, et O3: ces données d'identification sont des données de droits de lecture DL_O1, DL_O2, et DL_03 qui contiennent l'information relative aux droits de lecture des objets numériques O1, O2, O3.

Ces droits de lecture peuvent par exemple comprendre l'information suivante : {« le chat botté », « Charles Perrault », « Un meunier ne laissa pas tous bien à trois enfants [...] », « 1699 », « .pdf », ...}. Ces droits de lecture sont gérés par les e-distributeurs 40 avec l'accord des éditeurs (non représentés ici).

L'utilisateur U sélectionne donc via la librairie numérique 10 uniquement la donnée de droits de lecture DL_O1, DL_O2, et DL_03 de l'objet numérique O1, O2, O3 qu'il souhaite, et non l'objet numérique O1, O2, O3 en tant que tel.

En d'autres termes, dans l'exemple décrit ici, la librairie numérique 10 contient les données DL_O1, DL_O2, et DL_03 qui pointent et renvoient respectivement sur les objets numériques correspondants O1, O2, et O3, ces objets numériques O1, O2, O3 étant eux-mêmes stockés chez un distributeur 40 d'objets numériques qui hébergent une troisième base de données DB3 stockant les objets numériques O1, O2, et O3 en tant que tels.

Cette spécificité permet notamment de bien distinguer les corps de métier des différents acteurs opérant dans la chaîne de distribution des objets numériques.

On comprend en outre que, grâce à cette distinction dans les différents corps de métiers et grâce à ce type d'échange de données, il peut y avoir plusieurs librairies numériques et plusieurs distributeurs d'objets numériques, ce qui permet d'élargir et d'enrichir l'offre à destination des consommateurs finaux.

Par souci de clarté, l'exemple de réalisation décrit ici se limite à une librairie numérique 10 et un distributeur numérique 40.

Les e-librairies 10 sont donc les faces visibles du système pour l'utilisateur. Chaque librairie présente un catalogue d'objets numériques O1, O2, O3, ce catalogue contenant les métadonnées issues des droits de lecture.

Optionnellement (non illustré ici), le procédé de mise à disposition selon l'invention peut comprendre après cette sélection une demande de confirmation de la sélection, par exemple pour confirmer la sélection avant l'achat final.

Dans l'exemple décrit ici, le serveur de gestion des droits de lecture 10 comprend une deuxième base de données DB2 stockant également des données de droit de lecture DL_O1, DL_O2, et DL_O3 qui contiennent chacune une information relative aux droits de lecture pour les objets numériques O1, O2, et O3.

Comme évoqué précédemment, les première DB1 et deuxième DB2 base de données sont fournies et alimentées notamment par le distributeur 40 d'objets numériques.

Suite à la sélection décrite ci-dessus et à l'éventuelle demande de confirmation, le serveur de gestion des droits de lecture 10 génère, lors d'une étape de génération S10 et par l'intermédiaire d'un moyen de génération M2, une donnée de droit de lecture personnel DLP_O1, DLP_O2, DLP_O3 en fonction de la donnée de droits de lecture DL_O1, DL_O2, DL_O3 du ou des objets numériques sélectionnés O1, O2, O3.

Dans l'exemple décrit ici, la donnée de droit de lecture personnel DLP_O1, DLP_O2, DLP_O3 contient une information relative aux droits de lecture de l'objet numérique sélectionné O1, O2, O3, une information d'identification relative à l'utilisateur U, et une information relative aux droits d'utilisation de l'objet numérique sélectionné O1, O2, O3.

En d'autres termes, lorsqu'un utilisateur U sélectionne et achète un objet numérique O1, O2 et/ou O3, les données de droits de lecture DL_O1, DL_O2, DL_O3 deviennent personnelles, et sont augmentées d'au moins une information relative à l'utilisateur et à l'achat/sélection.

A titre d'exemple, l'information relative aux droits d'utilisation de l'objet numérique sélectionné O1, O2, O3 peut être une information du type par exemple la période d'utilisation de l'objet numérique, la date d'acquisition de l'objet numérique, etc.

L'information relative aux droits de lecture de l'objet numérique sélectionné peut, quant à elle, être une information du type par exemple les formats disponibles de l'objet numérique, les informations commerciales telles que le prix, ou encore les informations sur l'œuvre telles que par exemple le titre, l'auteur, le compositeur, etc.

Dans l'exemple de réalisation décrit, la donnée de droit de lecture personnel DLP_O1, DLP_O2, DLP_O3 consiste en la donnée de droit lecture DL_O1, DL_O2, DL_O3 à laquelle sont ajoutées les informations mentionnées ci-dessus, ceci par concaténation ou agrégation des données correspondantes.

A titre d'exemple, et de façon synthétique, cette donnée dite de « DLP » (pour Droit de Lecture Personnel) se présente sous la forme suivante :

$$DLP = DL + \{\text{« librairie X », « date d'achat} = 18/11/2011 \text{ », « droits d'utilisation} = Y \text{ »}\}.$$

Dans l'exemple décrit ici, le serveur de gestion 20 des droits de lecture comporte un moyen de transmission M3 qui permet lors d'une étape de transmission S20 la transmission de cette donnée de droit de lecture personnel DLP_O1, DLP_O2, DLP_O3 vers le gestionnaire de bibliothèque numérique personnelle 30.

Le gestionnaire de bibliothèque numérique personnelle 30 a ensuite pour fonction de gérer la vie des objets numériques sélectionnés : classement, création de listes de lecture, lecture sur divers terminaux compatibles, etc.

Dans l'exemple de réalisation décrit ici, le gestionnaire de bibliothèque numérique personnelle 30 comporte un moyen de stockage numérique M7 qui est spécialement configuré pour recevoir et mémoriser la donnée de droit de lecture personnel DLP_O1, DLP_O2, DLP_O3 ainsi transmise.

Ainsi, grâce à cette succession d'étapes techniques, le gestionnaire de librairie numérique personnelle 30 comprend une ou plusieurs données de droit de lecture personnel DLP_O1, DLP_O2, DLP_O3 correspondant chacune aux différents objets numériques sélectionnés O1, O2, et/ou O3 par l'utilisateur U.

En fonction de ces données de droit de lecture personnel DLP_O1, DLP_O2, DLP_O3, le gestionnaire de bibliothèque personnelle numérique 30 récupère chez le e-distributeur 40 les fichiers ad hoc qui sont nécessaires pour que l'utilisateur puisse manipuler les objets sélectionnés O1, O2, O3 et qui sont compatibles avec l'équipement T1 et les logiciels de lecture de l'utilisateur.

Permettre une souplesse d'accès au contenu du ou des objets numériques sélectionnés est un des objectifs de la présente invention. Aussi, la présente invention prévoit la possibilité à l'utilisateur U d'accéder aux objets numériques O1, O2, O3 par l'intermédiaire de plusieurs types de terminaux.

A cet effet, le gestionnaire de bibliothèque numérique personnelle 30 comporte également un moyen d'enregistrement M6 qui permet à l'utilisateur U lors d'une étape d'enregistrement S40 d'enregistrer à l'aide de la donnée d'identification ID_U un deuxième équipement T2 de lecture numérique. Dans l'exemple décrit ici, cet enregistrement consiste à générer puis transmettre un certificat numérique secret CNS au deuxième équipement T2 de lecture numérique.

Ce certificat numérique CNS peut être un certificat logiciel.

Comme évoqué précédemment, l'étape d'enregistrement S40 peut également être effectuée pour le premier équipement T1 suite à l'étape de création de compte. Dans ce cas, un certificat numérique est également stocké sur le premier équipement T1.

Permettre via un gestionnaire de bibliothèque numérique personnelle 30 l'accès au contenu du ou des objets numériques O1, O2, O3 est un des objectifs de la présente invention.

Aussi, suite à une connexion du premier T1 ou du deuxième T2 équipement de lecture numérique au gestionnaire de bibliothèque numérique personnelle 30, ledit gestionnaire 30 comprend un moyen d'authentification M4 qui, lors d'une étape d'authentification S30, permet l'authentification de l'utilisateur U, cette authentification se faisant par l'intermédiaire de la donnée d'identification ID_U et/ou du certificat numérique CNS.

De façon optionnelle (non représentée ici), suite à cette authentification, la bibliothèque numérique est mise à jour : cette mise à jour traite les droits de lecture qui ont été acquis, perdus, ou qui sont en fin de droit depuis la précédente connexion.

L'authentification déclenche ensuite une phase d'activation des droits d'utilisation (non représentée ici). Cette phase d'activation permet de favoriser des achats du type cadeau : en effet, il est possible de déclencher les droits d'utilisation non pas au moment de l'achat, mais lors de la première lecture, ce qui permet de créer des offres limitées dans le temps par exemple.

Suite à cette activation, le procédé de mise à disposition peut également prévoir une phase de sécurisation supplémentaire au cours de laquelle une couche de sécurisation utilisant des fichiers DRM est ajoutée.

Ces phases d'authentification, d'activation et de sécurisation étant réalisées, l'utilisateur peut accéder aux objets numériques O1, O2, O3 qu'il a sélectionnés, ceci bien évidemment en fonction des données de droit de lecture personnel DLP_O1, DLP_O2, DLP_O3 dont il dispose.

Cette mise à disposition du ou des objets numériques sélectionnés O1, O2, O3 se fait indifféremment soit par exemple par téléchargement soit par exemple par « streaming ».

Cette succession d'étapes techniques est gérée par un programme d'ordinateur PG qui comporte des instructions adaptées pour l'exécution des étapes du procédé de mise à disposition et qui est contenu sur un support d'enregistrement CI.

Ainsi, le système de mise à disposition 100 d'objets numériques selon la présente invention propose un modèle ouvert avec au moins 3 acteurs de sorte que chaque acteur (éditeur, e-distributeurs, e-librairies, serveur de gestion des droits) se concentre sur son métier pour enrichir l'offre d'objets numériques, et rendre plus simple et plus souple l'accès aux objets numériques.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

## Revendications

1. Procédé de mise à disposition d'au moins un objet numérique (O1, O2, O3) stocké chez un distributeur (40) d'objets numériques hébergeant une base de données comprenant des objets numériques à destination d'un utilisateur (U) muni d'un premier équipement (T1) de lecture numérique sur lequel est stockée localement une donnée d'identification (ID_U) contenant au moins une information d'identification relative à l'utilisateur (U), le procédé de mise à disposition comportant :

   - suite à une sélection par l'intermédiaire du premier équipement (T1) de lecture numérique d'un objet numérique (O1, O2, O3) sur une librairie numérique (10), une étape de génération (S10) par un serveur de gestion (20) des droits de lecture d'une donnée de droit de lecture personnel (DLP_O1, DLP_O2, DLP_O3) contenant au moins une information relative aux droits de lecture de l'objet numérique sélectionné (O1, O2, O3) et ladite au moins une information d'identification relative à l'utilisateur (U),
   - une étape de transmission (S20) de la donnée de droit de lecture personnel (DLP_O1, DLP_O2, DLP_O3) vers un gestionnaire de bibliothèque numérique personnelle (30), et
   - suite à une connexion du premier équipement (T1) de lecture numérique au gestionnaire de bibliothèque numérique personnelle (30), une étape d'authentification (S30) de l'utilisateur par l'intermédiaire de la donnée d'identification (ID_U),

   en sorte de permettre, en fonction de ladite donnée de droit de lecture personnel (DLP_O1, DLP_O2, DLP_O3), la mise à disposition de l'objet numérique sélectionné (O1, O2, O3) sur le premier équipement (T1) de lecture numérique par récupération par le gestionnaire de bibliothèque numérique personnelle (30) des fichiers nécessaires auprès dudit distributeur (40) d'objets numériques pour la manipulation de l'au moins un objet numérique par l'utilisateur via le premier équipement (T1).

**2.** Procédé de mise à disposition selon la revendication 1, **caractérisé en ce qu'**il comporte une étape de création de compte (S0) auprès du gestionnaire de bibliothèque numérique personnelle (30) au cours de laquelle la donnée d'identification (ID_U) est générée et est transmise au premier équipement (T1) de lecture numérique.

**3.** Procédé de mise à disposition selon la revendication 1 ou 2, **caractérisé en ce que** l'étape de génération (S30) consiste notamment à concaténer une donnée de droit de lecture (DL_O1, DL_O2, DL_O3) contenant une information relative aux droits de lecture de l'objet numérique sélectionné (O1, O2, O3) avec la donnée d'identification (ID_U).

**4.** Procédé de mise à disposition selon l'une quelconque des revendications 1 à 3, **caractérisé en ce que** la donnée de droit de lecture personnel (DLP_O1, DLP_O2, DLP_O3) contient au moins une information relative aux droits d'utilisation de l'objet numérique sélectionné (O1, O2, O3).

**5.** Procédé de mise à disposition selon l'une quelconque des revendications 1 à 4, **caractérisé en ce qu'**il comporte une étape d'enregistrement (S40) consistant notamment à enregistrer à l'aide de la donnée d'identification (ID_U) un deuxième équipement (T2) de lecture numérique pour permettre la mise à disposition de l'objet numérique sélectionné (O1, O2, O3) sur ledit deuxième équipement (T2) de lecture numérique.

**6.** Procédé de mise à disposition selon la revendication 5, **caractérisé en ce que** l'étape d'enregistrement (S40) consiste à générer puis transmettre un certificat numérique secret (CNS) au deuxième équipement (T2) de lecture numérique suite à une connexion dudit deuxième équipement (T2) au gestionnaire de bibliothèque numérique personnelle (30) à l'aide de la donnée d'identification (ID_U).

**7.** Programme d'ordinateur (PG) comportant des instructions adaptées pour l'exécution des étapes du procédé de mise à disposition selon l'une quelconque des revendications 1 à 6 lorsque ledit programme d'ordinateur (PG) est exécuté par un ordinateur.

**8.** Support d'enregistrement (CI) lisible par un ordinateur sur lequel est enregistré un programme d'ordinateur (PG) comprenant des instructions pour l'exécution des étapes du procédé de mise à disposition selon l'une quelconque des revendications 1 à 6.

**9.** Système de mise à disposition (100) d'au moins un objet numérique (O1, O2, O3) stocké chez un distributeur (40) d'objets numériques hébergeant une base de données comprenant des objets numériques à destination d'un utilisateur (U) muni d'un premier équipement (T1) de lecture numérique sur lequel est stockée localement une donnée d'identification (ID_U) contenant au moins une information d'identification relative à l'utilisateur (U), ledit système de mise à disposition (100) comprenant au moins une librairie numérique (10), un serveur de gestion (20) des droits de lecture, et un gestionnaire de bibliothèque numérique personnelle (30),

    - ladite au moins une librairie numérique (10) comportant :

        a) un moyen de sélection (M1) configuré pour permettre la sélection par l'intermédiaire du premier équipement (T1) de lecture numérique d'au moins un objet numérique (O1, O2, O3),

    - le serveur de gestion (20) des droits de lecture comportant :

        b) une deuxième base de données (DB2) stockant au moins une donnée de droit de lecture (DL_O1, DL_O2, DL_O3) contenant une information relative aux droits de lecture pour ledit au moins un objet numérique (O1, O2, O3),
        c) un moyen de génération (M2) configuré pour permettre, en fonction de la donnée de droits de lecture (DL_O1, DL_O2, DL_O3) dudit au moins un objet numérique sélectionné (O1, O2, O3), la génération d'une donnée de droit de lecture personnel (DLP_O1, DLP_O2, DLP_O3) contenant au moins une information relative aux droits de lecture de l'objet numérique sélectionné (O1, O2, O3) et ladite au moins une information d'identification relative à l'utilisateur (U), et
        d) un moyen de transmission (M3) configuré pour permettre la transmission de la donnée de droit de lecture personnel (DLP_O1, DLP_O2, DLP_O3) vers le gestionnaire de bibliothèque numérique personnelle (30), et

    - le gestionnaire de bibliothèque numérique personnelle (30) comportant un moyen d'authentification (M4) configuré pour permettre, suite à une connexion du premier équipement (T1) de lecture numérique au gestionnaire de bibliothèque numérique personnelle (30), l'authentification de l'utilisateur (U) par l'intermédiaire de la donnée d'identification (ID_U),

en sorte de permettre, en fonction de la donnée de droit de lecture personnel (DLP_O1, DLP_O2, DLP_O3), la mise à disposition dudit au moins un objet numérique sélectionné (O1, O2, O3) sur le premier équipement (T1) de lecture numérique par récupération par le gestionnaire de bibliothèque numérique personnelle (30) des fichiers nécessaires auprès dudit distributeur (40) d'objets numériques pour la manipulation de l'au moins un objet numérique par l'utilisateur via le premier équipement (T1).

10. Système de mise à disposition (100) selon la revendication 9, **caractérisé en ce que** le gestionnaire de bibliothèque numérique personnelle (30) comporte un moyen de création de compte (M5) configuré pour générer et transmettre la donnée d'identification (ID_U) au premier équipement (T1) de lecture numérique.

11. Système de mise à disposition (100) selon la revendication 9 ou 10, **caractérisé en ce que** le moyen de génération (M2) est configuré pour concaténer la donnée de droit de lecture (DL_O1, DL_O2, DL_O3) contenant une information relative aux droits de lecture de l'objet numérique sélectionné (O1, O2, O3) avec la donnée d'identification (ID_U).

12. Système de mise à disposition (100) selon l'une quelconque des revendications 9 à 11, **caractérisé en ce que** le moyen de génération (M2) est configuré de telle manière que la donnée de droit de lecture personnel (DLP_O1, DLP_O2, DLP_O3) contient au moins une information relative aux droits d'utilisation de l'objet numérique sélectionné (O1, O2, O3).

13. Système de mise à disposition (100) selon l'une quelconque des revendications 9 à 12, **caractérisé en ce que** le gestionnaire de bibliothèque numérique personnelle (30) comporte un moyen d'enregistrement (M6) configuré pour enregistrer à l'aide de la donnée d'identification (ID_U) un deuxième équipement (T2) de lecture numérique pour permettre la mise à disposition de l'objet numérique sélectionné (O1, O2, O3) sur ledit deuxième équipement (T2).

14. Système de mise à disposition (100) selon la revendication 13, **caractérisé en ce que** le moyen d'enregistrement (M6) est configuré pour générer puis transmettre un certificat numérique secret (CNS) au deuxième équipement (T2) de lecture numérique suite à une connexion dudit deuxième équipement (T2) au gestionnaire de bibliothèque numérique (30) à l'aide de la donnée d'identification (ID_U).

15. Système de mise à disposition (100) selon l'une quelconque des revendications 9 à 14, **caractérisé en ce que** le gestionnaire de bibliothèque numérique personnelle (30) comporte un moyen de stockage numérique (M7) configuré pour recevoir et mémoriser la donnée de droit de lecture personnel (DLP_O1, DLP_O2, DLP_O3) transmise par le serveur de gestion (20) des droits de lecture.

**Patentansprüche**

1. Verfahren zur Bereitstellung mindestens eines digitalen Objekts (O1, O2, O3), das bei einem Verteiler (40) digitaler Objekte gespeichert ist, in dem eine digitale Objekte enthaltende Datenbank untergebracht ist, für einen Benutzer (U), der mit einer ersten digitalen Leseausrüstung (T1) ausgestattet ist, in der lokal ein mindestens eine Identifikationsinformation bezüglich des Benutzers (U) enthaltender Identifikationsdatenwert (ID_U) gespeichert ist, wobei das Bereitstellungsverfahren aufweist:

- nach einer Auswahl eines digitalen Objekts (O1, O2, O3) in einer digitalen Buchhandlung (10) mittels der ersten digitalen Leseausrüstung (T1), einen Schritt der Generierung (S10) eines persönlichen Leserecht-Datenwerts (DLP_O1, DLP_O2, DLP_O3), der mindestens eine Information bezüglich der Leserechte des ausgewählten digitalen Objekts (O1, O2, O3) und die mindestens einen Identifikationsinformation bezüglich des Benutzers (U) enthält, durch einen Leserechte-Verwaltungsserver (20),
- einen Schritt der Übertragung (S20) des persönlichen Leserecht-Datenwerts (DLP_O1, DLP_O2, DLP_O3) an einen Verwalter einer persönlichen digitalen Bibliothek (30), und
- nach einer Verbindung der ersten digitalen Leseausrüstung (T1) mit dem Verwalter einer persönlichen digitalen Bibliothek (30), einen Schritt der Authentifizierung (S30) des Benutzers mittels des Identifikationsdatenwerts (ID_U),

um abhängig vom persönlichen Leserecht-Datenwert (DLP_O1, DLP_O2, DLP_O3) die Bereitstellung des ausgewählten digitalen Objekts (O1, O2, O3) in der ersten digitalen Leseausrüstung (T1) durch Gewinnung der notwendigen Dateien beim Verteiler (40) digitaler Objekte durch den Verwalter einer persönlichen digitalen Bibliothek (30) für die Handhabung des mindestens einen digitalen Objekts durch den Benutzer über die erste Ausrüstung (T1) zu erlauben.

2. Bereitstellungsverfahren nach Anspruch 1, **dadurch gekennzeichnet, dass** es einen Schritt der Kontogenerierung (S0) beim Verwalter einer persönlichen digitalen Bibliothek (30) enthält, während dessen der Identifikationsdatenwert (ID_U) generiert und an die erste digitale Leseausrüstung (T1) übertragen wird.

3. Bereitstellungsverfahren nach Anspruch 1 oder 2, **dadurch gekennzeichnet, dass** der Generierungsschritt (S30) insbesondere darin besteht, einen Leserecht-Datenwert (DL_O1, DL_O2, DL_O3), der eine Information bezüglich der Leserechte des ausgewählten digitalen Objekts (O1, O2, O3) enthält, mit dem Identifikationsdatenwert (ID_U) zu verknüpfen.

4. Bereitstellungsverfahren nach einem der Ansprüche 1 bis 3, **dadurch gekennzeichnet, dass** der persönliche Leserecht-Datenwert (DLP_O1, DLP_O2, DLP_O3) mindestens eine Information bezüglich der Nutzungsrechte des ausgewählten digitalen Objekts (O1, O2, O3) enthält.

5. Bereitstellungsverfahren nach einem der Ansprüche 1 bis 4, **dadurch gekennzeichnet, dass** es einen Schritt der Registrierung (S40) aufweist, der insbesondere darin besteht, mit Hilfe des Identifikationsdatenwerts (ID_U) eine zweite digitale Leseausrüstung (T2) zu registrieren, um die Bereitstellung des ausgewählten digitalen Objekts (O1, O2, O3) in der zweiten digitalen Leseausrüstung (T2) zu erlauben.

6. Bereitstellungsverfahren nach Anspruch 5, **dadurch gekennzeichnet, dass** der Registrierungsschritt (S40) darin besteht, ein geheimes digitales Zertifikat (CNS) zu generieren und dann nach einer Verbindung der zweiten Ausrüstung (T2) mit dem Verwalter einer persönlichen digitalen Bibliothek (30) mit Hilfe des Identifikationsdatenwerts (ID_U) an die zweite digitale Leseausrüstung (T2) zu übertragen.

7. Computerprogramm (PG), das Anweisungen aufweist, die für die Ausführung der Schritte des Bereitstellungsverfahrens nach einem der Ansprüche 1 bis 6 geeignet sind, wenn das Computerprogramm (PG) von einem Computer ausgeführt wird.

8. Computerlesbarer Aufzeichnungsträger (CI), auf dem ein Computerprogramm (PG) aufgezeichnet ist, das Anweisungen zur Ausführung der Schritte des Bereitstellungsverfahrens nach einem der Ansprüche 1 bis 6 enthält.

9. System zur Bereitstellung (100) mindestens eines digitalen Objekts (O1, O2, O3), das bei einem Verteiler (40) digitaler Objekte gespeichert ist, in dem eine digitale Objekte enthaltende Datenbank untergebracht ist, für einen Benutzer (U), der mit einer ersten digitalen Leseausrüstung (T1) ausgestattet ist, in der lokal ein Identifikationsdatenwert (ID_U) gespeichert ist, der mindestens eine Identifikationsinformation bezüglich des Benutzers (U) enthält, wobei das Bereitstellungssystem (100) mindestens eine digitale Buchhandlung (10), einen Leserechte-Verwaltungsserver (20) und einen Verwalter einer persönlichen digitalen Bibliothek (30) enthält,

   - wobei die mindestens eine digitale Buchhandlung (10) aufweist:

      a) eine Auswahleinrichtung (M1), die konfiguriert ist, die Auswahl mindestens eines digitalen Objekts (O1, O2, O3) mittels der ersten digitalen Leseausrüstung (T1) zu erlauben,

   - wobei der Leserechte-Verwaltungsserver (20) aufweist:

      b) eine zweite Datenbank (DB2), die mindestens einen Leserecht-Datenwert (DL_O1, DL_O2, DL_O3) speichert, der eine Information bezüglich der Leserechte für das mindestens eine digitale Objekt (O1, O2, O3) enthält,
      c) eine Generierungseinrichtung (M2), die konfiguriert ist, abhängig vom Leserechte-Datenwert (DL_O1, DL_O2, DL_O3) des mindestens einen ausgewählten digitalen Objekts (O1, O2, O3) die Generierung eines persönlichen Leserecht-Datenwerts (DLP_O1, DLP_O2, DLP_O3) zu erlauben, der mindestens eine Information bezüglich der Leserechte des ausgewählten digitalen Objekts (O1, O2, O3) und die mindestens eine Identifikationsinformation bezüglich des Benutzers (U) enthält, und
      d) eine Übertragungseinrichtung (M3), die konfiguriert ist, die Übertragung des persönlichen Leserecht-Datenwerts (DLP_O1, DLP_O2, DLP_O3) an den Verwalter einer persönlichen digitalen Bibliothek (30) zu erlauben, und

- der Verwalter einer persönlichen digitalen Bibliothek (30) eine Authentifizierungseinrichtung (M4) aufweist, die konfiguriert ist, nach einer Verbindung der ersten digitalen Leseausrüstung (T1) mit dem Verwalter einer persönlichen digitalen Bibliothek (30) die Authentifizierung des Benutzers (U) mittels des Identifikationsdatenwerts (ID_U) zu erlauben,

um abhängig vom persönlichen Leserecht-Datenwert (DLP_O1, DLP_O2, DLP_O3) die Bereitstellung des mindestens einen ausgewählten digitalen Objekts (O1, O2, O3) in der ersten digitalen Leseausrüstung (T1) durch Gewinnung der notwendigen Dateien beim Verteiler (40) digitaler Objekte durch den Verwalter einer persönlichen digitalen Bibliothek (30) zur Handhabung des mindestens einen digitalen Objekts durch den Benutzer über die erste Ausrüstung (T1) zu erlauben.

10. Bereitstellungssystem (100) nach Anspruch 9, **dadurch gekennzeichnet, dass** der Verwalter einer persönlichen digitalen Bibliothek (30) eine Kontoerzeugungseinrichtung (M5) aufweist, die konfiguriert ist, den Identifikationsdatenwert (ID_U) zu generieren und an die erste digitale Leseausrüstung (T1) zu übertragen.

11. Bereitstellungssystem (100) nach Anspruch 9 oder 10, **dadurch gekennzeichnet, dass** die Generierungseinrichtung (M2) konfiguriert ist, den Leserecht-Datenwert (DL_O1, DL_O2, DL_O3), der eine Information bezüglich der Leserechte des ausgewählten digitalen Objekts (O1, O2, O3) enthält, mit dem Identifikationsdatenwert (ID_U) zu verknüpfen.

12. Bereitstellungssystem (100) nach einem der Ansprüche 9 bis 11, **dadurch gekennzeichnet, dass** die Generierungseinrichtung (M2) so konfiguriert ist, dass der persönliche Leserecht-Datenwert (DLP_O1, DLP_O2, DLP_O3) mindestens eine Information bezüglich der Nutzungsrechte des ausgewählten digitalen Objekts (O1, O2, O3) enthält.

13. Bereitstellungssystem (100) nach einem der Ansprüche 9 bis 12, **dadurch gekennzeichnet, dass** der Verwalter einer persönlichen digitalen Bibliothek (30) eine Registrierungseinrichtung (M6) aufweist, die konfiguriert ist, mit Hilfe des Identifikationsdatenwerts (ID_U) eine zweite digitale Leseausrüstung (T2) zu registrieren, um die Bereitstellung des ausgewählten digitalen Objekts (O1, O2, O3) in der zweiten Ausrüstung (T2) zu erlauben.

14. Bereitstellungssystem (100) nach Anspruch 13, **dadurch gekennzeichnet, dass** die Registrierungseinrichtung (M6) konfiguriert ist, ein geheimes digitales Zertifikat (CNS) zu generieren und dann nach einer Verbindung der zweiten Ausrüstung (T2) mit dem Verwalter einer digitalen Bibliothek (30) mit Hilfe des Identifikationsdatenwerts (ID_U) an die zweite digitale Leseausrüstung (T2) zu übertragen.

15. Bereitstellungssystem (100) nach einem der Ansprüche 9 bis 14, **dadurch gekennzeichnet, dass** der Verwalter einer persönlichen digitalen Bibliothek (30) eine digitale Speichereinrichtung (M7) aufweist, die konfiguriert ist, den vom Leserechte-Verwaltungsserver (20) übertragenen persönlichen Leserecht-Datenwert (DLP_O1, DLP_O2, DLP_O3) zu empfangen und zu speichern.

## Claims

1. Method of making available at least one digital object (O1, O2, O3) stored by a distributor (40) of digital objects hosting a database comprising digital objects destined for a user (U) furnished with first digital reading equipment (T1) on which is stored locally an identification datum (ID_U) containing at least one item of identification information relating to the user (U), the method of making available comprising:

- subsequent to a selection by way of the first digital reading equipment (T1) of a digital object (O1, O2, O3) on a digital bookshop (10), a step (S10) of generating by a reading rights management server (20) a personal reading right datum (DLP_O1, DLP_O2, DLP_O3) containing at least one item of information relating to the reading rights of the selected digital object (O1, O2, O3) and said at least one item of identification information relating to the user (U),
- a step (S20) of transmitting the personal reading right datum (DLP_O1, DLP_O2, DLP_O3) to a personal digital library manager (30), and
- subsequent to a connecting of the first digital reading equipment (T1) to the personal digital library manager (30), a step (S30) of authenticating the user by way of the identification datum (ID_U),

so as to allow, as a function of said personal reading right datum (DLP_O1, DLP_O2, DLP_O3), the making available of the selected digital object (O1, O2, O3) on the first digital reading equipment (T1) by recovery by the personal digital library manager (30) of the necessary files from said distributor (40) of digital objects for the manipulation of the at least one digital object by the user via the first equipment (T1) .

2. Method of making available according to Claim 1, **characterized in that** it comprises a step (S0) of creating an account with the personal digital library manager (30) in the course of which the identification datum (ID_U) is generated and is transmitted to the first digital reading equipment (T1).

3. Method of making available according to Claim 1 or 2, **characterized in that** the generating step (S30) consists in particular in concatenating a reading right datum (DL_O1, DL_O2, DL_O3) containing an item of information relating to the reading rights of the selected digital object (O1, O2, O3) with the identification datum (ID_U).

4. Method of making available according to any one of Claims 1 to 3, **characterized in that** the personal reading right datum (DLP_O1, DLP_O2, DLP_O3) contains at least one item of information relating to the rights of use of the selected digital object (O1, O2, O3).

5. Method of making available according to any one of Claims 1 to 4, **characterized in that** it comprises a registering step (S40) consisting in particular in registering with the aid of the identification datum (ID_U) second digital reading equipment (T2) so as to allow the making available of the selected digital object (O1, O2, O3) on said second digital reading equipment (T2).

6. Method of making available according to Claim 5, **characterized in that** the registering step (S40) consists in generating and then transmitting a secret digital certificate (CNS) to the second digital reading equipment (T2) subsequent to a connecting of said second equipment (T2) to the personal digital library manager (30) with the aid of the identification datum (ID_U) .

7. Computer program (PG) comprising instructions adapted for the execution of the steps of the method of making available according to any one of Claims 1 to 6 when said computer program (PG) is executed by a computer.

8. Recording medium (CI) readable by a computer on which is recorded a computer program (PG) comprising instructions for the execution of the steps of the method of making available according to any one of Claims 1 to 6.

9. System for making available (100) at least one digital object (O1, O2, O3) stored by a distributor (40) of digital objects hosting a database comprising digital objects destined for a user (U) furnished with first digital reading equipment (T1) on which is stored locally an identification datum (ID_U) containing at least one item of identification information relating to the user (U), said system for making available (100) comprising at least one digital bookshop (10), a reading rights management server (20), and a personal digital library manager (30),

   - said at least one digital bookshop (10) comprising:

      a) a selection means (M1) configured to allow the selection by way of the first digital reading equipment (T1) of at least one digital object (O1, O2, O3),

   - the reading rights management server (20) comprising:

      b) a second database (DB2) storing at least one reading right datum (DL_O1, DL_O2, DL_O3) containing an item of information relating to the reading rights in respect of said at least one digital object (O1, O2, O3),
      c) a generating means (M2) configured to allow, as a function of the datum of reading rights (DL_O1, DL_O2, DL_O3) of said at least one selected digital object (O1, O2, O3), the generation of a personal reading right datum (DLP_O1, DLP_O2, DLP_O3) containing at least one item of information relating to the reading rights of the selected digital object (O1, O2, O3) and said at least one item of identification information relating to the user (U), and
      d) a transmission means (M3) configured to allow the transmission of the personal reading right datum (DLP_O1, DLP_O2, DLP_O3) to the personal digital library manager (30), and

- the personal digital library manager (30) comprising an authentication means (M4) configured to allow, subsequent to a connecting of the first digital reading equipment (T1) to the personal digital library manager (30), the authentication of the user (U) by way of the identification datum (ID_U),

so as to allow, as a function of the personal reading right datum (DLP_O1, DLP_O2, DLP_O3), the making available of said at least one selected digital object (O1, O2, O3) on the first digital reading equipment (T1) by recovery by the personal digital library manager (30) of the necessary files from said distributor (40) of digital objects for the manipulation of the at least one digital object by the user via the first equipment (T1).

10. System for making available (100) according to Claim 9, **characterized in that** the personal digital library manager (30) comprises an account creation means (M5) configured to generate and transmit the identification datum (ID_U) to the first digital reading equipment (T1).

11. System for making available (100) according to Claim 9 or 10, **characterized in that** the generating means (M2) is configured to concatenate the reading right datum (DL_O1, DL_O2, DL_O3) containing an item of information relating to the reading rights of the selected digital object (O1, O2, O3) with the identification datum (ID_U).

12. System for making available (100) according to any one of Claims 9 to 11, **characterized in that** the generating means (M2) is configured in such a way that the personal reading right datum (DLP_O1, DLP_O2, DLP_O3) contains at least one item of information relating to the rights of use of the selected digital object (O1, O2, O3).

13. System for making available (100) according to any one of Claims 9 to 12, **characterized in that** the personal digital library manager (30) comprises a registering means (M6) configured to register with the aid of the identification datum (ID_U) second digital reading equipment (T2) so as to allow the making available of the selected digital object (O1, O2, O3) on said second equipment (T2).

14. System for making available (100) according to Claim 13, **characterized in that** the registering means (M6) is configured to generate and then transmit a secret digital certificate (CNS) to the second digital reading equipment (T2) subsequent to a connecting of said second equipment (T2) to the digital library manager (30) with the aid of the identification datum (ID_U) .

15. System for making available (100) according to any one of Claims 9 to 14, **characterized in that** the personal digital library manager (30) comprises a digital storage means (M7) configured to receive and store the personal reading right datum (DLP_O1, DLP_O2, DLP_O3) transmitted by the reading rights management server (20).

FIG. 1

FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005240588 A

**Littérature non-brevet citée dans la description**

- **HEEYOUL KIM.** *Digital Rights Management with Right Delegation for Home Networks*